# EUROPEAN PATENT APPLICATION

(11) **EP 3 890 393 A1**
(43) Date of publication of application: **06.10.2021**
(21) Application number: 18941593.8
(22) Date of filing: 28.11.2018
(51) Int. Cl.: H04W 28/06, H04W 72/04, H04W 72/08

(54) **USER TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); HARADA, Hiroki, Tokyo 100-6150 (JP); MURAYAMA, Daisuke, Tokyo 100-6150 (JP); NAGATA, Satoshi, Tokyo 100-6150 (JP)
(74) Representative: Hoffmann Eitle
(86) International application number: PCT/JP2018/043856
(87) International publication number: WO 2020/110244

(57) **Abstract**

A user terminal has a receiving section that receives first downlink control information indicative of a resource of a downlink shared channel and a resource of an uplink control channel for Hybrid Automatic Repeat reQuest-ACKnowledgement (HARQ-ACK) in response to the downlink shared channel, and second downlink control information indicative of resources of a plurality of uplink shared channels and a given field at a transmission opportunity based on listening, and a control section that determines whether or not to multiplex the HARQ-ACK into a given uplink shared channel based on the given field, in the case where at least one given uplink shared channel among the plurality of uplink shared channels overlaps the uplink control channel. According to one aspect of the present disclosure, in the case where uplink shared channels are scheduled, the HARQ-ACK is properly transmitted.

## Description

### Technical Field

The present disclosure relates to a user terminal and radio communication method in the next-generation mobile communication system.

### Background Art

In Universal Mobile Telecommunications System (UMTS) networks, for the purpose of higher data rates, low delay and the like, Long Term Evolution (LTE) has been specified (Non-patent Document 1). Further, for the purpose of higher capacity, more sophistication and the like than LTE (Third Generation Partnership Project (3GPP) Release (Rel.) 8, 9), LTE-Advanced (3GPP Rel. 10-14) has been specified.

Successor systems (e.g., also referred to as 5th generation mobile communication system (5G), 5G+ (plus), New Radio (NR), 3GPP Rel.15 onward, etc.) to LTE have also been studied.

In the existing LTE system (e.g., 3GPP Rel.8-14), a user terminal (User Equipment (UE)) transmits Uplink Control Information (UCI), using at least one of a UL data channel (e.g., Physical Uplink Shared Channel (PUSCH)) and a UL control channel (e.g., Physical Uplink Control Channel (PUCCH)).

### Prior Art Document

### Non-patent Document

[Non-patent Document 1] 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Disclosure of Invention

### Problems to be Solved by the Invention

In future radio communication systems (e.g., NR, 5G, 5G+ or Rel.15 onward), it is expected to indicate, to a UE, transmission timing of a receipt confirmation signal (also called HARQ-ACK, ACK/NACK or A/N) in response to a DL signal (e.g., PDSCH), using DCI and the like. Further, it is expected that the UE transmits HARQ-ACK as feedback based on a codebook (on a codebook-by-codebook basis).

Further, in NR, it is expected that transmission of an uplink shared channel (PUSCH) is indicated to a UE using the DCI and the like, and that the UE transmits HARQ-ACK on the uplink shared channel.

However, in the case where the uplink shared channel is scheduled, it is a problem how to transmit HARQ-ACK. When the HARQ-ACK is not properly transmitted, there is the risk of occurrences of deterioration of the communication quality and the like.

Therefore, in the present disclosure, it is an object to provide a user terminal and radio communication method for properly transmitting HARQ-ACK, in the case where uplink shared channels are scheduled. Means for Solving the Problem

A user terminal according to one aspect of the present disclosure is characterized by having a receiving section that receives first downlink control information indicative of a resource of a downlink shared channel and a resource of an uplink control channel for Hybrid Automatic Repeat reQuest-ACKnowledgement (HARQ-ACK) in response to the downlink shared channel, and second downlink control information indicative of resources of a plurality of uplink shared channels and a given field at a transmission opportunity based on listening, and a control section that determines whether or not to multiplex the HARQ-ACK into a given uplink shared channel based on the given field, in the case where at least one given uplink shared channel among the plurality of uplink shared channels overlaps the uplink control channel.

### Advantageous Effect of the Invention

According to one aspect of the present disclosure, in the case where uplink shared channels are scheduled, the HARQ-ACK is properly transmitted.

### Brief Description of Drawings

FIG. 1 is a diagram illustrating one example of operation for piggybacking a semi-static HARQ-ACK codebook onto PUSCH;
FIG. 2 is a diagram illustrating one example of multi-TTI scheduling in NR-U;
FIG. 3 is a diagram illustrating one example of operation of Aspect 1;
FIG. 4 is a diagram illustrating one example of operation of Aspect 2-1;
FIG. 5 is a diagram illustrating one example of operation of Aspect 3;
FIG. 6 is a diagram illustrating one example of operation of Aspect 4;
FIG. 7 is a diagram illustrating one example of a schematic configuration of a radio communication system according to one Embodiment;
FIG. 8 is a diagram illustrating one example of a configuration of a base station according to one Embodiment;
FIG. 9 is a diagram illustrating one example of a configuration of a user terminal according to one Embodiment; and
FIG. 10 is a diagram illustrating one example of hardware configurations of the base station and user terminal according to one Embodiment.

### Best Mode for Carrying Out the Invention

### <HARQ-ACK feedback>

In NR, such a mechanism is studied that a user terminal (UE: User Equipment) makes feedback (also referred to as reports, transmits or the like) about receipt confirmation information (also referred to as Hybrid Automatic Repeat reQuest-ACKnowledge (HARQ-ACK), ACKnowledge/Non-ACK (ACK/NACK), HARQ-ACK information, A/N or the like) in response to a downlink shared channel (also referred to as Physical Downlink Shared Channel (PDSCH) and the like).

For example, in NR Rel.15, a value of a given field within DCI (e.g., DCI format 1_0 or 1_1) used in scheduling of a PDSCH indicates feedback timing of HARQ-ACK in response to the PDSCH. In the case where a UE transmits, in a slot #n+k, HARQ-ACK in response to the PDSCH received in a slot #n, the value of the given field may be mapped to a value of k. For example, the given field is called a PDSCH-to-HARQ_feedback timing indicator field and the like.

Further, in NR Rel.15, based on a value of a given field within DCI (e.g., DCI format 1_0 or 1_1) used in scheduling of a PDSCH, determined are PUCCH resources used in feedback of HARQ-ACK in response to the PDSCH. For example, the given field may be called a PUCCH resource indicator (PRI) field, ACK/NACK resource indicator (ARI) field and the like. The value of the given field may be called PRI, ARI and the like.

The PUCCH resources mapped to each value of the given field may be beforehand configured at a UE by a higher layer parameter (e.g., Resource List within PUCCH-Resource Set). Further, the PUCCH resources may be configured at a UE for each set (PUCCH resource set) including one or more PUCCH resources.

Further, in NR Rel.15, it is studied that a UE does not expect to transmit uplink control channels (Physical Uplink Control Channel (PUCCH)) more than one having HARQ-ACKs in a single slot.

Specifically, in NR Rel.15, one or more HARQ-ACKs in a single slot are mapped to a single HARQ-ACK codebook, and the HARQ-ACK codebook may be transmitted in PUCCH resources indicated by the last DCI.

Herein, the HARQ-ACK codebook may be configured including bits for the HARQ-ACKs in a unit of at least one of a time domain (e.g., slot), frequency domain (e.g., Component Carrier (CC)), spatial domain (e.g., layer), Transport Block (TB), and group (Code Block Group (CBG)) of code blocks constituting the TB. In addition, the CC is also called a cell, serving cell, carrier and the like. Further, the bit is also called a HARQ-ACK bit, HARQ-ACK information, HARQ-ACK information bit or the like.

The HARQ-ACK codebook is also called a PDSCH- HARQ-ACK codebook (pdsch-HARQ-ACK-Codebook), codebook, HARQ codebook, HARQ-ACK size and the like.

The number of bits (size) included in the HARQ-ACK codebook and so on may be determined semi-statically or dynamically. The semi-static HARQ-ACK codebook is also called Type-1 HARQ-ACK codebook, semi-static codebook and the like. The dynamic HARQ-ACK codebook is also called Type-2 HARQ-ACK codebook, dynamic codebook and the like.

Using the Type-1 HARQ-ACK codebook or the Type-2 HARQ-ACK codebook may be configured at the UE by the higher layer parameter (e.g., pdsch-HARQ-ACK-Codebook).

In the case of the Type-1 HARQ-ACK codebook, in a given range (e.g., range configured based on the higher layer parameter), irrespective of the presence or absence of scheduling of the PDSCH, the UE may transmit the HARQ-ACK bit that corresponds to the given range as feedback.

The given range may be defined, based on at least one of a given period (e.g., set of the given number of occasions for PDSCH reception as candidates, or the given number of monitoring occasions of the PDCCH), the number of CCs configured or activated at the UE, the number of TBs (the number of layers or rank), the number of CBGs per TB, and the presence or absence of application of spatial bundling. The given range is also called an HARQ-ACK bundling window, HARQ-ACK feedback window, bundling window, feedback window and the like.

In the Type-1 HARQ-ACK codebook, within the given range, also in the case of absence of scheduling of the PDSCH for a UE, the UE transmits the NACK bit as feedback. Therefore, in the case of using the Type-1 HARQ-ACK codebook, it is also assumed that the number of HARQ-ACK bits for feedback is increased.

On the other hand, in the case of the Type-2 HARQ-ACK codebook, within the above-mentioned given range, the UE may transmit the HARQ-ACK bit in response to the scheduled PDSCH as feedback.

Specifically, the UE may determine the number of bits of the Type-2 HARQ-ACK codebook, based on a given field (e.g., DL assignment index (Downlink Assignment Indicator (Index) (DAI)) field) in the DCI. The DAI field may be split into a counter DAI (cDAI) and total DAI (tDAI).

The counter DAI may indicate a counter value of downlink transmission (PDSCH, data, TB) scheduled within a given period. For example, the counter DAI in the DCI for scheduling data within the given period may indicate the number which is counted first in the frequency domain (e.g., CC index order) and then, in the time domain (time index order) within the given period.

The total DAI may indicate the total value (total number) of items of data scheduled within the given period. For example, the total DAI in the DCI for scheduling data in a given time unit (e.g., PDCCH monitoring occasion) within the given period may indicate the total number of items of data scheduled up to the given time unit (also referred to as a point, timing and the like) within the given period.

Further, in the case of not configuring, at a UE, code block group (CBG)-based (CBG-based) transmission (CBG-based HARQ-ACK codebook determination) by the higher layer parameter (PDSCH code block group transmission information element, PDSCH-Code Block Group Transmission), the UE assumes transport block (TB)- based (TB-based) transmission (TB-based HARQ-ACK codebook determination). In other words, the UE generates the HARQ-ACK information bit for each TB.

In the case where a UE is provided with the higher layer parameter of the PDSCH code block group transmission information element with respect to the serving cell (Component Carrier: CC), the UE receives the PDSCH including a plurality of CBGs of one TB. The PDSCH code block group transmission information element includes the maximum number of CBGs (max Code Block Groups Per Transport Block) within one TB. In response to TB reception of the serving cell, the UE generates the HARQ-ACK information bit of each of the plurality of CBGs, and generates an HARQ-ACK codebook including the HARQ-ACK information bits of the maximum number of CBGs.

The UE may transmit one or more HARQ-ACK bits determined (generated) based on the above-mentioned Type-1 or Type-2 of HARQ-ACK codebook, using at least one of the uplink control channel (Physical Uplink Control Channel (PUCCH)) and the uplink shared channel (Physical Uplink Shared Channel (PUSCH)).

In Rel.15, DCI format 0_1 (UL grant) used in scheduling of the PUSCH includes a field of 1 st downlink assignment index (first DAI) of 1 or 2 bits, and a field of 2nd downlink assignment index (second DAI) of 0 or 2 bits.

The first DAI for the semi-static HARQ-ACK codebook (Type-1 HARQ-ACK codebook) is 1 bit. The first DAI for the dynamic HARQ-ACK codebook (Type-2 HARQ-ACK codebook) is 2 bits.

The second DAI for the dynamic HARQ-ACK codebook having two HARQ-ACK sub-codebooks is 2 bits. In the other codebook, the second DAI is 0 bit.

In the case where a UE with the semi-static HARQ-ACK codebook configured multiplexes HARQ-ACK information into PUSCH transmission scheduled by DCI format 0_1, when a value V_{T-DAI}, m^{UL} of the DAI field (first DAI) within the DCI format 0_1 is "1", using the first DAI as a substitute for the total DAI, the UE may generate the HARQ-ACK codebook.

In the case where a UE with the dynamic HARQ-ACK codebook configured multiplexes HARQ-ACK information into PUSCH transmission scheduled by DCI format 0_1, based on the value V_{T-DAI}, ₘ^{UL} of the DAI field (first DAI) within the DCI format 0_1, using the first DAI as a substitute for the total DAI, the UE may generate the HARQ-ACK codebook.

In the case of using a first HARQ-ACK sub-codebook and second HARQ-ACK sub-codebook, DCI format 0_1 includes the first DAI corresponding to the first HARQ-ACK sub-codebook and the second DAI corresponding to the second HARQ-ACK sub-codebook.

In the case where the semi-static HARQ-ACK codebook is configured, the UE receives 1-bit UL DAI (first DAI) in a UL grant for scheduling a PUSCH. In the case where the value of UL DAI is "1" and the PUCCH for an HARQ-ACK report and the PUSCH conflict in at least one symbol, the UE piggybacks the HARQ-ACK onto the PUSCH (UCI on PUSCH, HARQ-ACK on PUSCH). In the case where the value of UL DAI is "1", irrespective of whether or not the PUCCH and PUSCH conflict, the base station assumes that the HARQ-ACK is piggybacked onto the PUSCH, and may perform rate matching of UL-SCH carried on the PUSCH. Also in the case where the UE fails to detect the PDCCH that corresponds to HARQ-ACK and the PUCCH and PUSCH do not conflict, the UE may transmit NACK on the PUSCH for rate matching.

In the case where the dynamic HARQ-ACK codebook is configured, the UE receives 2-bit UL DAI (first DAI) in a UL grant for scheduling a PUSCH. The UL DAI indicates the number (total DAI) of HARQ-ACKs piggybacked onto the PUSCH. In the case where the PUCCH for the HARQ-ACK report and the PUSCH conflict in at least one symbol, the UE piggybacks the number of HARQ-ACKs indicated by the UL DAI onto the PUSCH. Irrespective of whether or not the PUCCH and PUSCH conflict, the base station assumes that the number of HARQ-ACKs indicated by the UL DAI is piggybacked onto the PUSCH, and may perform rate matching of UL-SCH carried on the PUSCH. Also in the case where the UE fails to detect the PDCCH that corresponds to the HARQ-ACK and the PUCCH and PUSCH do not conflict, the UE may transmit the number of NACKs indicated by the UL DAI on the PUSCH for rate matching.

In the case where the CBG-based HARQ-ACK codebook is configured, the UE receives 2-bit UL DAI (first DAI) and 2-bit UL DAI (second DAI) in a UL grant for scheduling a PUSCH. The first DAI indicates the number of first HARQ-ACK sub-codebooks piggybacked onto the PUSCH. The second DAI indicates the number of second HARQ-ACK sub-codebooks piggybacked onto the PUSCH. In the case where the PUCCH for the HARQ-ACK report and the PUSCH conflict in at least one symbol, the UE piggybacks, onto the PUSCH, the number of first HARQ-ACK sub-codebooks indicated by the first DAI, and the number of second HARQ-ACK sub-codebooks indicated by the second DAI. Irrespective of whether or not the PUCCH and PUSCH conflict, the base station assumes that the number of HARQ-ACKs indicated by the first DAI and second DAI is piggybacked onto the PUSCH, and may perform rate matching of UL-SCH carried on the PUSCH. Also in the case where the UE fails to detect the PDCCH that corresponds to the HARQ-ACK and the PUCCH and PUSCH do not conflict, the UE may transmit the number of NACKs indicated by the first DAI and second DAI on the PUSCH for rate matching.

Thus, based on the UL DAI in a UL grant for scheduling a PUSCH, the UE determines whether or not to piggyback the HARQ-ACK onto the PUSCH.

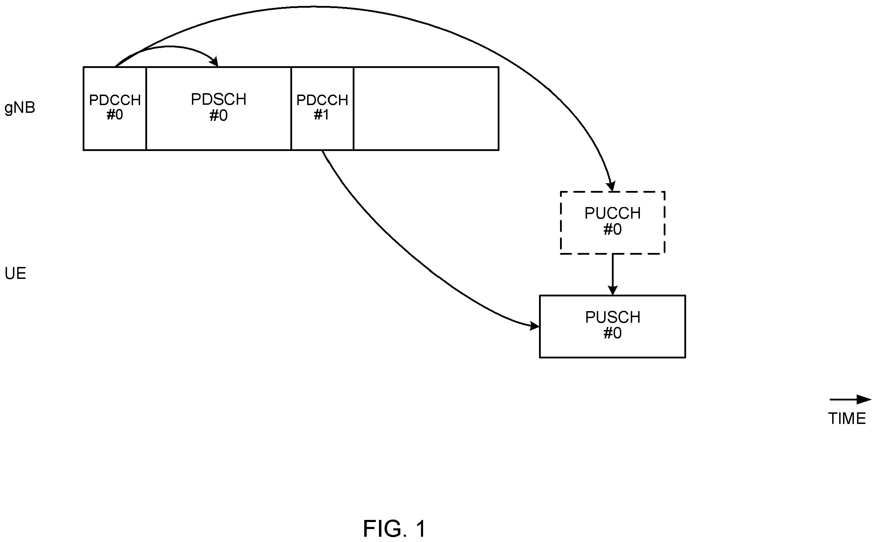

FIG. 1 is a diagram illustrating one example of operation for piggybacking the semi-static HARQ-ACK codebook onto the PUSCH. The UE receives a PDCCH #0 (DL assignment), PDSCH #0 and PDCCH #1 (UL grant). The PDCCH #0 indicates resources of the PDSCH #0 and resources of a PUCCH #0 for the HARQ-ACK report in response to the PDSCH #0. The PDCCH #1 indicates resources of a PUSCH #0 assigned to the same slot as the PUCCH #0, and includes 1-bit UL DAI (first DAI).

In the case where a value of the UL DAI is "1", and the PUCCH #0 and the PUSCH #0 conflict in at least one symbol, the UE piggybacks the HARQ-ACK report in response to the PDSCH #0 onto the PUSCH #0.

### <NR-U>

In LAA of the existing LTE system (e.g., Rel.13), before transmitting data in an unlicensed band, a transmitting apparatus of the data performs listening (also called LBT, CCA, carrier sense, channel access operation or the like) for ascertaining the presence or absence of transmission from another apparatus (e.g., base station, user terminal, Wi-Fi apparatus, etc.).

For example, the transmitting apparatus may be a base station (e.g., gNB: gNodeB) on downlink (DL), and may be a user terminal (e.g., UE: User Equipment) on uplink (UL). Further, for example, a receiving apparatus for receiving the data from the transmitting apparatus may be a user terminal on DL, and may be a base station on UL.

In LAA in the existing LTE system, a given period later (for example, immediately after or a period of back-off) after detecting that another apparatus does not transmit (idle state) in listening, the transmitting apparatus starts data transmission. However, even in the case where the transmitting apparatus transmits the data based on a result of the listening, as a result of existence of the hidden terminal, there is the risk that the receiving apparatus is not capable of avoiding a collision between data.

Therefore, in the future LAA system (e.g., also referred to as Rel. 15 onward, 5G, 5G+, NR or the like), in order to improve an avoidance rate of the collision between data in the receiving apparatus, it is studied to support the above-mentioned RTS/CTS. The future LAA system may be called an NR-U (Unlicensed) system, NR LAA system and the like.

In the NR-U system, it is studied to share a time (Channel Occupancy Time: COT) of Transmission Opportunity (TxOP) acquired by a base station (gNB) or UE among a plurality of nodes. The node may be one of the UE and base station, or may be a node of another system.

As a basic form of COT sharing, it may be assumed that DL and UL is in a one-to-one correspondence (e.g., loop back). In the case of a one-to-multi correspondence between DL and UL, COT sharing may be made available.

In the case where a node A performs LBT in an unlicensed CC, the LBT result is idle, and the node A acquires TxOP having a time length of COT, the node A performs data transmission in the unlicensed CC. Hereinafter, LBT to acquire TxOP is called initial LBT (Initial-LBT: I-LBT). In the TxOP, a remaining time in transmission by the node A may be allocated to another node (node B, C, etc.) capable of receiving a signal from the node A.

In the NR-U system, operation of carrier aggregation (CA) using the unlicensed CC and licensed CC may be performed, operation of dual connectivity (DA) using the unlicensed CC and licensed CC may be performed, and operation of standalone (SA) using only the unlicensed CC may be performed. The CA, DC or SA may be performed by one system of NR and LTE, and the DC may be performed by at least two of NR, LTE and another system.

UL transmission in the unlicensed CC may be at least one of PUSCH, PUCCH and SRS.

The node may perform LBT in LTE LAA, or receiver assisted LBT, as the I-LBT. The LBT of LTE LAA in this case may be Category 4.

As a channel access method in LTE LAA, the following four categories are defined.
Category 1: A node performs transmission without performing LBT.
Category 2: A node performs carrier sense in a fixed sensing time before transmission, and in the case where a channel is available, performs transmission.
Category 3: A node generates a value (random back-off) randomly in a given range before transmission, performs repeatedly carrier sense in a fixed sensing slot time, and in the case where the node is capable of ascertaining that a channel is available over a slot of the value, performs transmission.
Category 4: A node generates a value (random back-off) randomly in a given range before transmission, performs repeatedly carrier sense in a fixed sensing slot time, and in the case where the node is capable of ascertaining that a channel is available over a slot of the value, performs transmission. Corresponding to a communication failure condition due to contention with communication of another system, the node changes a range (contention window size) of the random back-off value.

Further, it is studied to perform LBT corresponding to a length of a gap (non-transmission period, period where received power is a given threshold or less, etc.) between two transmissions.

For flexibility of scheduling within TxOP or improvements in usage efficiency of radio resources, a plurality of UL transmissions by one UE or a plurality of UL transmissions by a plurality of UEs may be subjected to Time Division Multiplex (TDM) or Frequency Division Multiplex (FDM).

### <Multi-TTI scheduling>

In multi-TTI (Transmission Time Interval) scheduling (multi-slot scheduling), one UL grant is used to schedule the same TB or a plurality of TBs having different HARQ-ACK process IDs over a plurality of slots. It is studied that NR-U supports the multi-TTI scheduling.

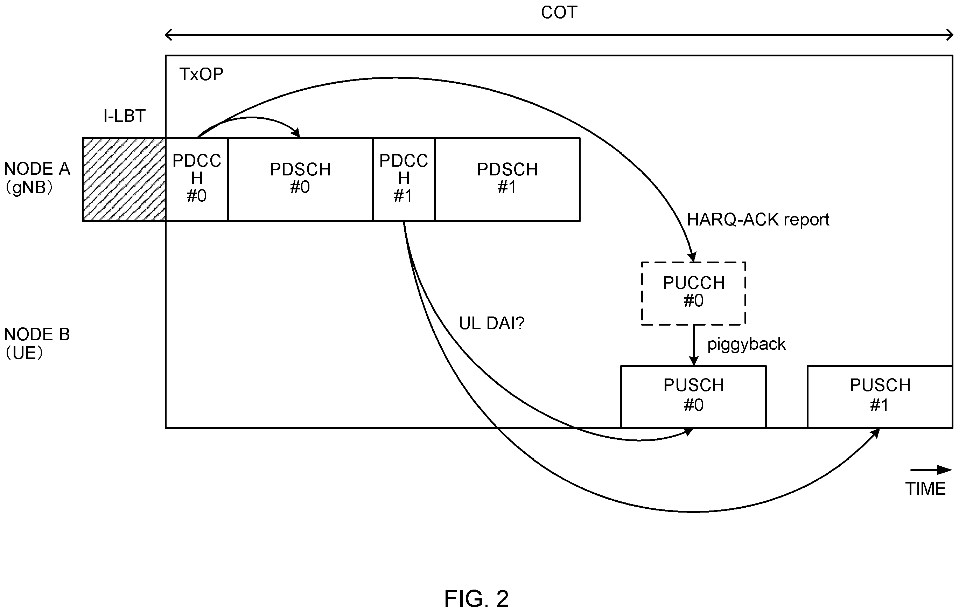

FIG. 2 is a diagram illustrating one example of the multi-TTI scheduling in NR-U. A base station (gNB) performs initial-LBT to acquire a transmission opportunity (TxOP), and in the case where the LBT result is idle, acquires the TxOP having a time length of COT. Within the TxOP, the base station transmits a PDCCH #0, PDSCH #0, PDCCH #1 and PDSCH #1.

The PDCCH #0 indicates resources of the PDSCH #0, and resources of a PUCCH #0 for the HARQ-ACK report in response to the PDSCH #0. The PDCCH #1 indicates resources of PUSCHs #0 and #1 over a plurality of slots within the TxOP, and includes the UL DAI.

Thus, in the case where one UL grant schedules a plurality of PUSCHs, it is not obvious how a UE operates based on the UL DAI within the UL grant. For example, it is not obvious that the UL DAI indicates which PUSCH to piggyback. When operation based on the UL DAI is not clarified, it is not possible to properly transmit the HARQ-ACK on the PUSCH, and there is the risk that performance of the system deteriorates.

Therefore, the inventors of the present invention conceived the method of properly determining whether or not to piggyback the HARQ-ACK onto at least one PUSCH among a plurality of PUSCHs based on a UL grant.

Embodiments according to the present disclosure will be described below in detail with reference to drawings. A radio communication method according to each of the Embodiments may be applied alone, or may be applied in combination.

The present invention will be described below using NR-U (unlicensed CC) as an example, and is also applicable to the other systems (e.g., NR, licensed CC).

In the present disclosure, the unlicensed CC may be read with a carrier (cell, CC), LAA SCell, LAA cell, primary cell (Primary Cell: PCell, Special Cell: SpCell), secondary cell (Secondary Cell: SCell) and the like of a first frequency band (unlicensed band, unlicensed spectrum). Further, the licensed CC may be read with a carrier (cell, CC), PCell, SCell and the like of a second frequency band (licensed band, licensed spectrum).

Further, in the present disclosure, the unlicensed CC may be an NR base (NR unlicensed CC), or may be an LTE base. Similarly, the licensed CC may also be an NR base or an LTE base.

Radio communication systems (NR-U, LAA system, etc.) in the present disclosure may conform to (support the first radio communication standard) the first radio communication standard (e.g., NR, LTE, etc.).

Another system (coexisting system, coexisting apparatus) and another radio communication apparatus (coexisting apparatus) coexisting with the radio communication system may conform to (support the second radio communication standard) the second radio communication standard, such as radio LAN (Local Area Network), Ultra Mobile Broadband (UMB), IEEE 802.11 (Wi-Fi (Registered Trademark)), IEEE 802.16 (WiMAX (Registered Trademark)), IEEE 802.20, Ultra-Wide Band (UWB), Bluetooth (Registered Trademark), WiGig (Registered Trademark), LPWA (Low Power Wide Area) and the like, different from the first radio communication standard. The coexisting system may be a system undergoing interference from the radio communication system, or may be a system for imposing interference on the radio communication system. The coexisting system may support RTS and CTS or equivalent transmission request signal and reception-capable signal.

In the present disclosure, an apparatus (node A) for performing I-LBT may be a base station (transmitting apparatus). Further, at a transmission opportunity acquired by another apparatus (node A), an apparatus (node B or C) for receiving data from another apparatus may be a UE (receiving apparatus). The data transmitted by the base station and UE may include at least one of user data and control information.

In the present disclosure, the given field may be read with UL DAI, DAI in DCI format 0_1, first DAI, second DAI and the like.

### (Radio communication method)

### <Aspect 1>

In the multi-TTI scheduling (in the case where one UL grant schedules a plurality of PUSCHs in a plurality of slots), a UE may piggyback (multiplex) the HARQ-ACK onto only one given PUSCH among a plurality of scheduled PUSCHs.

The given field (e.g., UL DAI) included in the UL grant for the multi-TTI scheduling may be information (HARQ-ACK codebook size, total DAI, etc.) indicative of whether or not to piggyback the HARQ-ACK onto the given PUSCH.

Which is the given PUSCH among a plurality of PUSCHs may be defined by specifications, or may be notified the UE by higher layer signaling. The given PUSCH may be a first PUSCH or a last PUSCH in order of given parameters in a plurality of scheduled PUSCHs. The given parameter may be based on time resources (slot, symbol, etc.) of the PUSCH, an HARQ-ACK process ID of the PUSCH and the like, or may be based on a combination thereof. The given parameter may be read with a given index.

Operation on another PUSCH among a plurality of scheduled PUSCHs may be defined by specifications, or may be notified the UE by higher layer signaling. The operation on another PUSCH may be to drop the HARQ-ACK corresponding to the other PUSCH to transmit the other PUSCH, or to drop the other PUSCH to transmit a PUCCH carrying the HARQ-ACK corresponding to the other PUSCH. Alternatively, in the case where the PUCCH carrying the HARQ-ACK and another PUSCH conflict in at least one symbol, the UE may not expect that the above-mentioned HARQ-ACK is piggybacked onto the above-mentioned PUSCH.

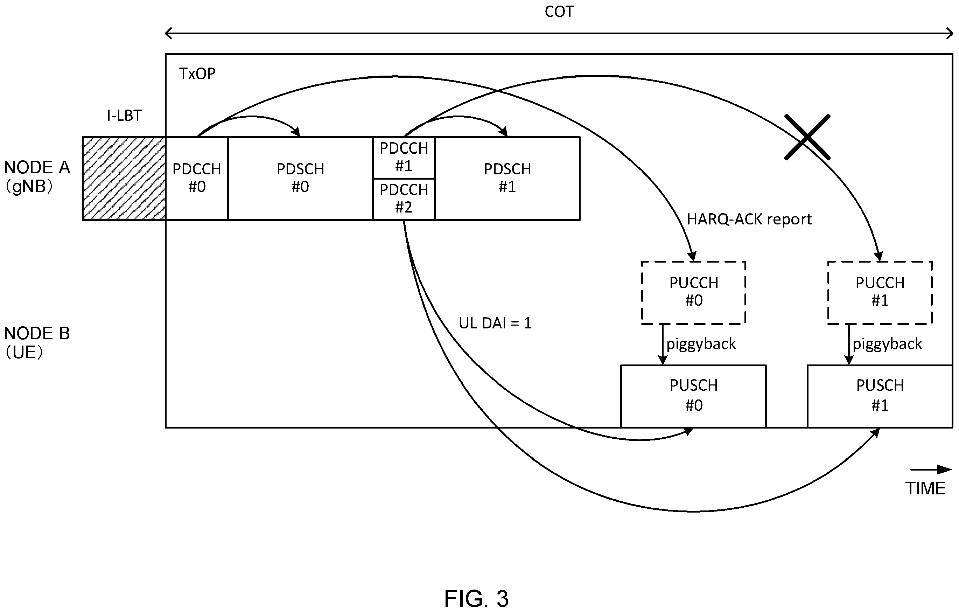

In an example in FIG. 3, within the TxOP, the UE receives a PDCCH #0 (first downlink control information), PDSCH #0, PDCCH #1 (first downlink control information), PDCCH #2 (second downlink control information) and PDSCH #1.

The PDCCH #0 indicates resources (allocation) of the PDSCH #0, and resources of a PUCCH #0 for HARQ-ACK transmission in response to the PDSCH #0. The PDCCH #1 indicates resources of the PDSCH #1, and resources of a PUCCH #1 for HARQ-ACK transmission in response to the PDSCH #1. A slot of the PUCCH #1 is different from that of the PUCCH #0. The PDCCH #2 indicates resources of a PUSCH #0 in the same slot as the PUCCH #0 and a PUSCH #1 in the same slot as the PUCCH #1, and includes the UL DAI.

In this example, when the given PUSCH is defined as a first PUSCH in order of time resources by specifications, the given PUSCH is the PUSCH #0. Accordingly, the UL DAI indicates whether or not to piggyback the HARQ-ACK onto the PUSCH #0. In the case where the UL DAI is "1" and the PUCCH #0 and PUSCH #0 conflict in at least one symbol, the UE piggybacks the HARQ-ACK in response to the PDSCH #0 onto the PUSCH #0.

In this example, the UE drops the HARQ-ACK in response to the PDSCH #1, and transmits the PUSCH #1. The UE may drop the PUSCH #1 to transmit the PUCCH #1 carrying the HARQ-ACK in response to the PDSCH #1.

A plurality of PUSCHs may be associated with a plurality of PDSCHs, respectively. In this example, the PUSCHs #0 and #1 may be associated with the PDSCHs #0 and #1, respectively.

According to Aspect 1, while suppressing overhead in the PDCCH, it is possible to perform the multi-TTI scheduling.

### <Aspect 2>

In the multi-TTI scheduling, the UE may piggyback the HARQ-ACK onto any PUSCH among a plurality of scheduled PUSCHs.

The UL DAI may comply with one of the following Aspects 2-1, 2-2.

### «Aspect 2-1»

The given field (e.g., UL DAI) included in the UL grant for the multi-TTI scheduling may be information (HARQ-ACK codebook size, total DAI, etc.) indicative of whether or not to piggyback the HARQ-ACK onto the given PUSCH.

Which is the given PUSCH among a plurality of PUSCHs may be defined by specifications, or may be notified the UE by higher layer signaling. The given PUSCH may be a first PUSCH or a last PUSCH in order of given parameters in a plurality of scheduled PUSCHs. The given parameter may be based on time resources (slot, symbol, etc.) of the PUSCH, the HARQ-ACK process ID of the PUSCH and the like, or may be based on a combination thereof.

Operation on another PUSCH among a plurality of scheduled PUSCHs may be defined by specifications, or may be notified the UE by higher layer signaling. The operation on another PUSCH may be to piggyback the HARQ-ACK onto the other PUSCH, drop the HARQ-ACK corresponding to the other PUSCH to transmit the other PUSCH, or to drop the other PUSCH to transmit a PUCCH carrying the HARQ-ACK corresponding to the other PUSCH.

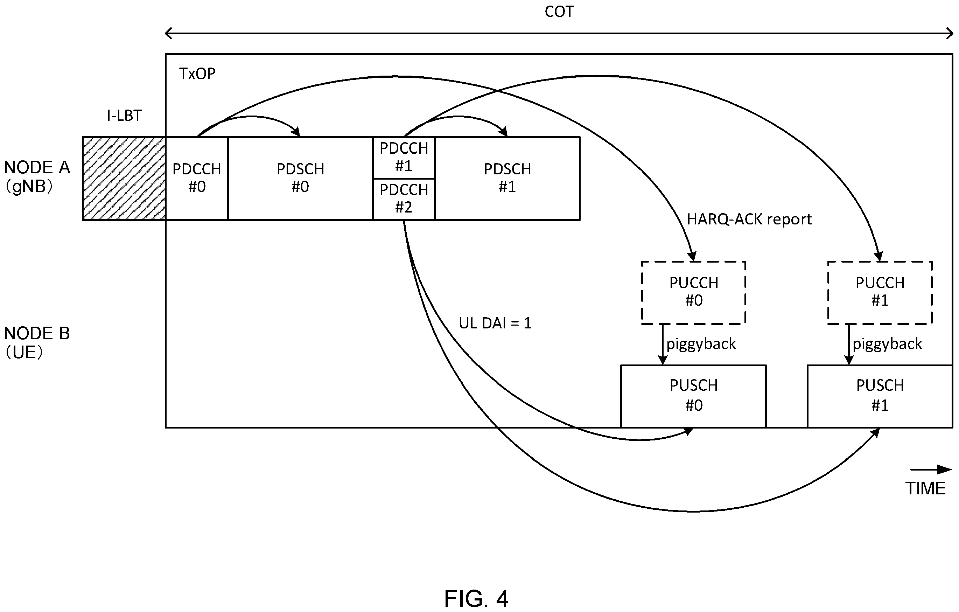

In an example in FIG. 4, within the TxOP, the UE receives a PDCCH #0, PDSCH #0, PDCCH #1, PDCCH #2 and PDSCH #1 as in FIG. 3.

In this example, when the given PUSCH is defined as a first PUSCH in order of time resources by specifications, the given PUSCH is a PUSCH #0. Accordingly, the UL DAI indicates whether or not to piggyback the HARQ-ACK onto the PUSCH #0. In the case where the UL DAI is "1" and a PUCCH #0 and PUSCH #0 conflict in at least one symbol, the UE piggybacks the HARQ-ACK in response to the PDSCH #0 onto the PUSCH #0.

As the operation on another PUSCH in this example, the UE piggybacks the HARQ-ACK in response to the PDSCH #1 onto the PUSCH #1.

When the UE succeeds in receiving the PDCCH #1 and PDCCH #2, any discrepancy does not occur between the base station and the UE in piggybacking the HARQ-ACK onto the PUSCH #1.

According to Aspect 2-1, while suppressing overhead in the PDCCH, it is possible to perform the multi-TTI scheduling.

### «Aspect 2-2»

The given field (e.g., UL DAI) included in the UL grant for the multi-TTI scheduling may be information (index, etc.) indicative of a PUSCH to piggyback among a plurality of PUSCHs.

The UL DAI in the UL grant indicative of resources of X PUSCHs or less may have log₂X bits. By this means, the UL DAI may indicate one among X values. Values of the UL DAI may be associated with X PUSCHs or less in order of given parameters. The given parameter may be based on time resources (slot, symbol, etc.) of the PUSCH, the HARQ-ACK process ID of the PUSCH and the like, or may be based on a combination thereof. The UE may piggyback the HARQ-ACK onto the given PUSCH associated with the value of the received UL DAI.

According to Aspect 2-2, it is possible to flexibly configure a PUSCH to piggyback.

### <Aspect 3>

In the multi-TTI scheduling, the UE may piggyback the HARQ-ACK onto any PUSCH among a plurality of scheduled PUSCHs.

The given field (e.g., UL DAI) included in the UL grant for the multi-TTI scheduling may be information indicative of whether or not to piggyback a corresponding HARQ-ACK onto each of a plurality of PUSCHs.

The UL DAI in the UL grant indicative of resources of X PUSCHs or less may be a bitmap having X bits. By this means, the UL DAI may indicate whether or not to piggyback the HARQ-ACK onto each of X PUSCHs. Bit positions in the bitmap may be associated with X PUSCHs or less in order of given parameters. The given parameter may be based on time resources (slot, symbol, etc.) of the PUSCH, the HARQ-ACK process ID of the PUSCH and the like, or may be based on a combination thereof. The UE may piggyback the HARQ-ACK onto the given PUSCH associated with the bit position with a value of "1".

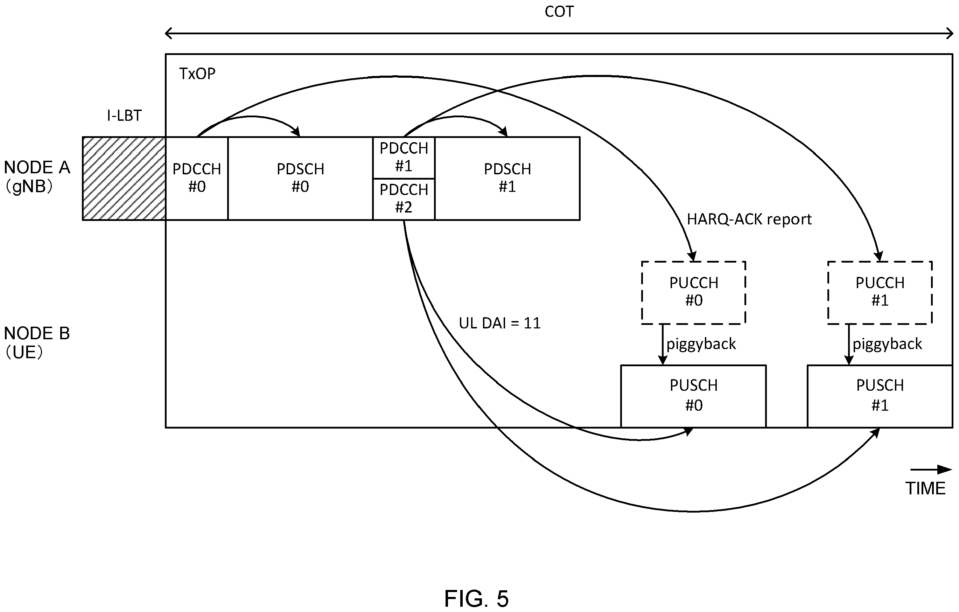

In an example in FIG. 5, within the TxOP, the UE receives a PDCCH #0, PDSCH #0, PDCCH #1, PDCCH #2 and PDSCH #1 as in FIG. 3.

In this example, the UL DAI is a bitmap of two bits, and the two bits respectively correspond to the PUSCHs #0 and #1. In the case where a value of the first bit in the UL DAI is "1" and a PUCCH #0 and PUSCH #0 conflict in at least one symbol, the UE piggybacks the HARQ-ACK in response to the PDSCH #0 onto the PUSCH #0. In the case where a value of the second bit in the UL DAI is "1" and a PUCCH #1 and PUSCH #1 conflict in at least one symbol, the UE piggybacks the HARQ-ACK in response to the PDSCH #1 onto the PUSCH #1.

According to Aspect 3, it is possible to flexibly configure whether or not to piggyback the HARQ-ACK onto each of a plurality of PUSCHs scheduled by the multi-TTI scheduling.

### <Aspect 4>

In the multi-TTI scheduling, the UE may piggyback the same HARQ-ACK onto a plurality of scheduled PUSCHs.

The given field (e.g., UL DAI) included in the UL grant for the multi-TTI scheduling may be information indicative of whether or not to piggyback the same HARQ-ACK onto a plurality of PUSCHs.

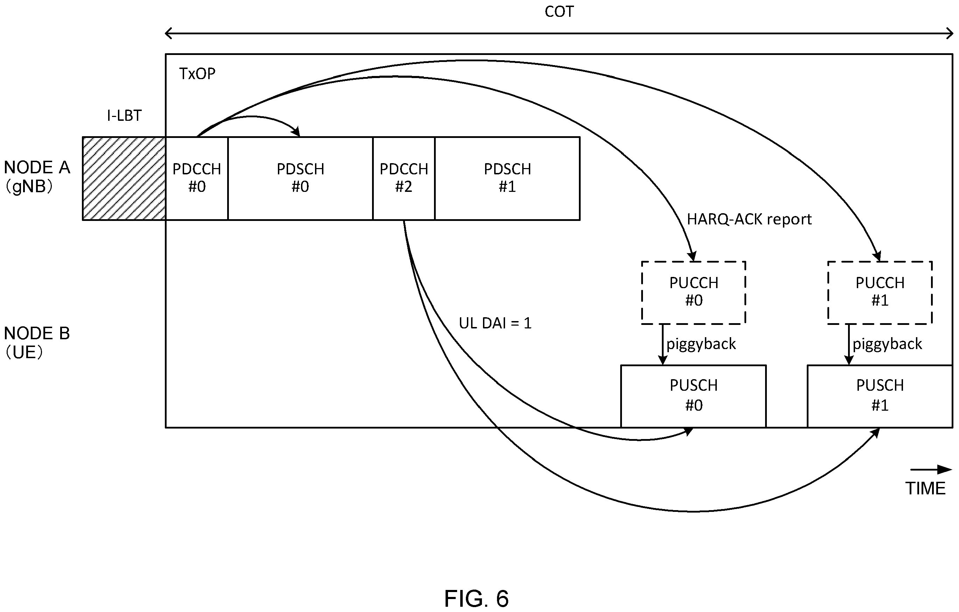

In an example in FIG. 6, within the TxOP, the UE receives a PDCCH #0, PDSCH #0, PDCCH #2 and PDSCH #1 as in FIG. 3.

In this example, the PDCCH #0 indicates resources of the PDSCH #0, and resources of PUCCHs #0 and #1 for HARQ-ACK transmission in response to the PDSCH #0.

The UL DAI in the UL grant in a PDCCH #1 indicates whether or not to piggyback the HARQ-ACK onto PUSCHs #0 and #1. In the case where the UL DAI is "1", and the PUCCH #0 and PUSCH #0 conflict in at least one symbol or the PUCCH #1 and PUSCH #1 conflict in at least one symbol, the UE piggybacks the HARQ-ACK in response to the PDSCH #0 onto the PUSCHs #0 and #1.

According to Aspect 4, while suppressing overhead in the PDCCH, it is possible to piggyback the HARQ-ACK onto the PUSCH in the multi-TTI scheduling.

### <Aspect 5>

In the multi-TTI scheduling, a UE may not be allowed to piggyback the HARQ-ACK onto the PUSCH.

### «Aspect 5-1»

Contention between the PUSCH scheduled by the multi-TTI scheduling and HARQ-ACK on PUCCH may be handled as an error case. In other words, the UE may not expect that the PUSCH scheduled by the multi-TTI scheduling conflicts with HARQ-ACK on PUCCH.

### «Aspect 5-2»

In the case where the PUSCH scheduled by the multi-TTI scheduling conflicts with HARQ-ACK on PUCCH, the UE may drop the PUSCH to transmit the PUCCH.

### «Aspect 5-3»

In the case where the PUSCH scheduled by the multi-TTI scheduling conflicts with HARQ-ACK on PUCCH, the UE may drop the PUCCH to transmit the PUSCH.

According to Aspect 5, the UE is capable of properly processing the PUCCH and PUSCH in the multi-TTI scheduling.

### <Another Embodiment>

### «Transmission outside TxOP»

The PUCCH and PUSCH may be scheduled in resources subsequent to TxOP (COT). The PDCCH (DL assignment) within the TxOP may indicate PUCCH resources subsequent to the TxOP for the HARQ-ACK report. The PDCCH (UL grant) within the TxOP may schedule the PUSCH subsequent to the TxOP.

The UE may perform LBT before transmitting each PUSCH subsequent to the TxOP. A time length of the LBT may be shorter than a time length of I-LBT before the TxOP. The time length of the LBT may be based on a time length of a gap between last reception or transmission and transmission of the PUSCH.

### «FDM of PUSCH»

In the present disclosure, the description is given mainly to the case of scheduling a plurality of PUSCHs over a plurality of slots by one UL grant, and each Aspect is applicable also to the case of scheduling a plurality of PUSCHs subjected to Frequency Division Multiplex (FDM) by one UL grant. The DL assignment may indicate a slot of the PUCCH for the HARQ-ACK report, and the UL grant may schedule a plurality of PUSCHs subjected to FDM in the slot.

In the case where a plurality of PUSCHs is subjected to FDM, the given parameter may be based on frequency resources (center frequency, Physical Resource Block (PRB) index (e.g., first PRB index)) of the PUSCH, the HARQ process ID of the PUSCH and the like, or may be based on a combination thereof.

### «Timing of PUCCH resource indicator»

The UE may be notified that timing and resources for HARQ-ACK feedback in response to a corresponding PDSCH are determined later by a value of an HARQ timing indicator (PUCCH resource indicator, PDSCH-to-HARQ-timing-indicator) in DCI for scheduling a PDSCH. After the DL assignment for scheduling a PDSCH, the UE may receive the PUCCH resource indicator (e.g., DCI) for the HARQ-ACK report in response to the PDSCH. After a UL grant for scheduling a PUSCH, the UE may receive the PUCCH resource indicator (e.g., DCI) for the HARQ-ACK report.

It may be handled as an error case that resources of a PUCCH indicated by the PUCCH resource indicator after the UL grant for scheduling a PUSCH overlap resources of the PUSCH. In other words, after the UL grant for scheduling a PUSCH, the UE may not except to receive the PUCCH resource indicator indicative of resources of the PUCCH overlapping resources of the PUSCH.

### «Other HARQ-ACK codebooks»

In the present disclosure, the description is given mainly to the case of using the semi-static (Type-1) HARQ-ACK codebook, and each Aspect is applicable also to the case of using the dynamic (Type-2) HARQ-ACK codebook and CBG-based HARQ-ACK codebook.

In Aspect 2-2, in the case where the dynamic HARQ-ACK codebook is configured, extending the UL DAI to log₂X bits may be read with extending the UL DAI (first DAI) to 2xlog₂X bits. In the case where the CBG-based HARQ-ACK codebook is configured, extending the UL DAI to log₂X bits may be read with extending the UL DAI (second DAI) to 2xlog₂X bits.

In Aspect 3, in the case where the dynamic HARQ-ACK codebook is configured, the UL DAI being the bitmap having X bits may be read with the UL DAI (first DAI) being a bitmap having 2X bits. In the case where the CBG-based HARQ-ACK codebook is configured, the UL DAI being the bitmap having X bits may be read with the UL DAI (second DAI) being a bitmap having 2X bits.

### (Radio communication system)

A configuration of a radio communication system according to one Embodiment of the present disclosure will be described below. In the radio communication system, communication is performed by using one of radio communication methods according to the respective above-mentioned Embodiments of the disclosure or combination thereof.

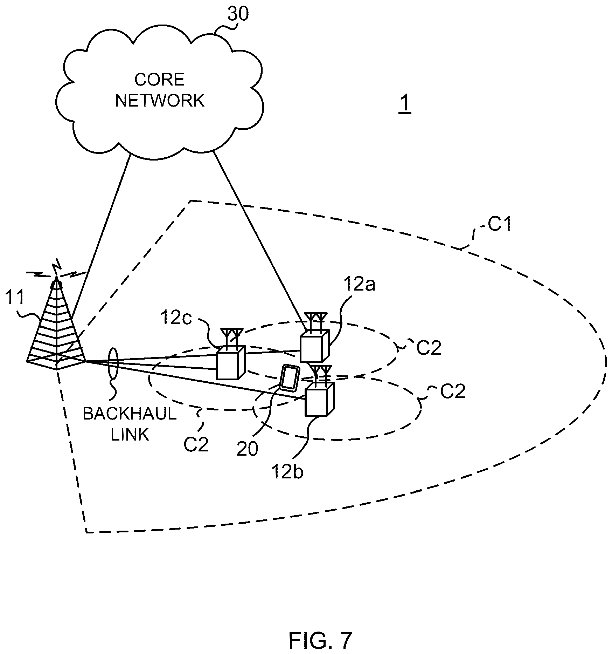

FIG. 7 is a diagram illustrating one example of a schematic configuration of the radio communication system according to one Embodiment. The radio communication system 1 may be a system for actualizing communication using Long Term Evolution (LTE), 5th generation mobile communication system New Radio (5G NR) and the like specified by Third Generation Partnership Project (3GPP).

Further, the radio communication system 1 may support dual connectivity (Multi-RAT Dual Connectivity (MR-DC)) among a plurality of Radio Access Technologies (RAT). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and the like.

In EN-DC, a base station (eNB) of LTE (E-UTRA) is a master node (Master Node (MN)), and a base station (gNB) of NR is a secondary node (Secondary Node (SN)). In NE-DC, a base station (gNB) of NR is an MN, and a base station (gNB) of LTE (E-UTRA) is an SN.

The radio communication system 1 may support dual connectivity (e.g., dual connectivity (NR-NR Dual Connectivity (NN-DC) where both of the MN and SN are the base stations (gNB) of NR) among a plurality of base stations in the same RAT.

The radio communication system 1 may be provided with a base station 11 for forming a macrocell C1 with relatively wide coverage, and base stations 12 (12a to 12c) disposed inside the macrocell C1 to form small cells C2 narrower than the macrocell C1. A user terminal 20 may be positioned in at least one cell. The arrangement, numbers and the like of each cell and user terminal 20 are not limited to the aspect illustrated in the figure. Hereinafter, in the case of not distinguishing between the base stations 11 and 12, the stations are collectively called a base station 10.

The user terminal 20 may connect to at least one of a plurality of base stations 10. The user terminal 20 may use at least one of carrier aggregation (Carrier Aggregation (CA)) using a plurality of component carriers (Component Carrier (CC)) and dual connectivity (DC).

Each CC may be included in at least one of a first frequency band (Frequency Range 1 (FR1)) and second frequency band (Frequency Range 2 (FR2)). The macrocell C1 may be included in the FR1, and the small cell C2 may be included in the FR2. For example, the FR1 may be a frequency band (sub-6 GHz) of 6 GHz or less, and the FR2 may be a high frequency band (above-24 GHz) higher than 24 GHz. In addition, the frequency bands, definitions and the like of the FR1 and FR2 are not limited thereto, and for example, the FR1 may correspond to a frequency band higher than the FR2.

Further, in each CC, the user terminal 20 may perform communication using at least one of Time Division Duplex (TDD) and Frequency Division Duplex (FDD).

A plurality of base stations 10 may be connected by cables (e.g., optical fiber in conformity with Common Public Radio Interface (CPRI), X2 interface, etc.), or by radio (e.g., NR communication). For example, in the case of using NR communication as backhaul between the base stations 11 and 12, the base station 11 corresponding to a higher station may be called an Integrated Access Backhaul (IAB) donor, and the base station 12 corresponding to a relay station (relay) may be called an IAB node.

The base station 10 may be connected to a core network 30 via another base station 10 or directly. For example, the core network 30 may include at least one of Evolved Packet Core (EPC), 5G Core Network (5GCN), Next Generation Core (NGC) and the like.

The user terminal 20 may be a terminal supporting at least one of communication schemes such as LTE, LTE-A, and 5G.

In the radio communication system 1, an Orthogonal Frequency Division Multiplexing (OFDM)-based radio access scheme may be used. For example, on at least one of downlink (Downlink (DL)) and uplink (Uplink (UL)) may be used Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA) and the like.

The radio access scheme may be called a waveform. In addition, in the radio communication system 1, another radio access scheme (e.g., another single carrier transmission scheme, another multi-carrier transmission scheme) may be used for the radio access scheme of UL and DL.

As downlink channels, in the radio communication system 1 may be used a downlink shared channel (Physical Downlink Shared Channel (PDSCH)) shared by user terminals 20, broadcast channel (Physical Broadcast Channel (PBCH)), downlink control channel (Physical Downlink Control Channel (PDCCH)) and the like.

Further, as uplink channels, in the radio communication system 1 may be used an uplink shared channel (Physical Uplink Shared Channel (PUSCH)) shared by user terminals 20, uplink control channel (Physical Uplink Control Channel (PUCCH)), random access channel (Physical Random Access Channel (PRACH)) and the like.

User data, higher layer control information, System Information Block (SIB) and the like are transmitted on the PDSCH. The user data, higher layer control information and the like may be transmitted on the PUSCH. Further, Master Information Block (MIB) may be transmitted on the PBCH.

Lower layer control information may be transmitted on the PDCCH. For example, the lower layer control information may include downlink control information (Downlink Control Information (DCI)) including scheduling information of at least one of the PDSCH and PUSCH.

In addition, DCI for scheduling the PDSCH may be called a DL assignment, DL DCI and the like, and DCI for scheduling the PUSCH may be called a UL grant, UL DCI and the like. In addition, the PDSCH may be read with DL data, and the PUSCH may be read with UL data.

For detection of the PDCCH, a control resource set (COntrol REsource SET (CORESET)) and search space may be used. The CORESET corresponds to resources to search for the DCI. The search space corresponds to a search region and search method of PDCCH candidates. One CORESET may be associated with one or a plurality of search spaces. The UE may monitor the CORESET related to some search space based on search space configuration.

One search space may correspond to PDCCH candidates corresponding to one or a plurality of aggregation levels. One or a plurality of search spaces may be called a search space set. In addition, the "search space", "search space set", "search space configuration", "search space set configuration", "CORESET", "CORESET configuration" and the like of the present disclosure may be read with one another.

For example, on the PUCCH may be transmitted uplink control information (Uplink Control Information (UCI)) including at least one of Channel State Information (CSI), receipt confirmation information (for example, which may be called Hybrid Automatic Repeat reQuest ACKnowledgement (HARQ-ACK), ACK/NACK and the like) and Scheduling Request (SR). A random access preamble to establish connection with the cell may be transmitted on the PRACH.

In addition, in the present disclosure, the downlink, uplink and the like may be expressed without attaching "link". Further, various channels may be expressed without attaching "Physical" at the beginning.

In the radio communication system 1 may be transmitted a Synchronization Signal (SS), Downlink Reference Signal (DL-RS) and the like. As the DL-RS, in the radio communication system 1 may be transmitted a Cell-specific Reference Signal (CRS), Channel State Information Reference Signal (CSI-RS), demodulation reference signal (DeModulation Reference Signal (DMRS)), Positioning Reference Signal (PRS), Phase Tracking Reference Signal (PTRS) and the like.

For example, the synchronization signal may be at least one of a Primary Synchronization Signal (PSS) and Secondary Synchronization Signal (SSS). A signal block including the SS (PSS, SSS) and PBCH (and DMRS for the PBCH) may be called an SS/PBCH block, SS Block (SSB) and the like. In addition, the SS, SSB and the like may also be called the reference signal.

Further, in the radio communication system 1, a Sounding Reference Signal (SRS), demodulation reference signal (DMRS) and the like may be transmitted as an Uplink Reference Signal (UL-RS). In addition, the DMRS may be called a user terminal-specific reference signal (UE-specific Reference Signal).

### (Base station)

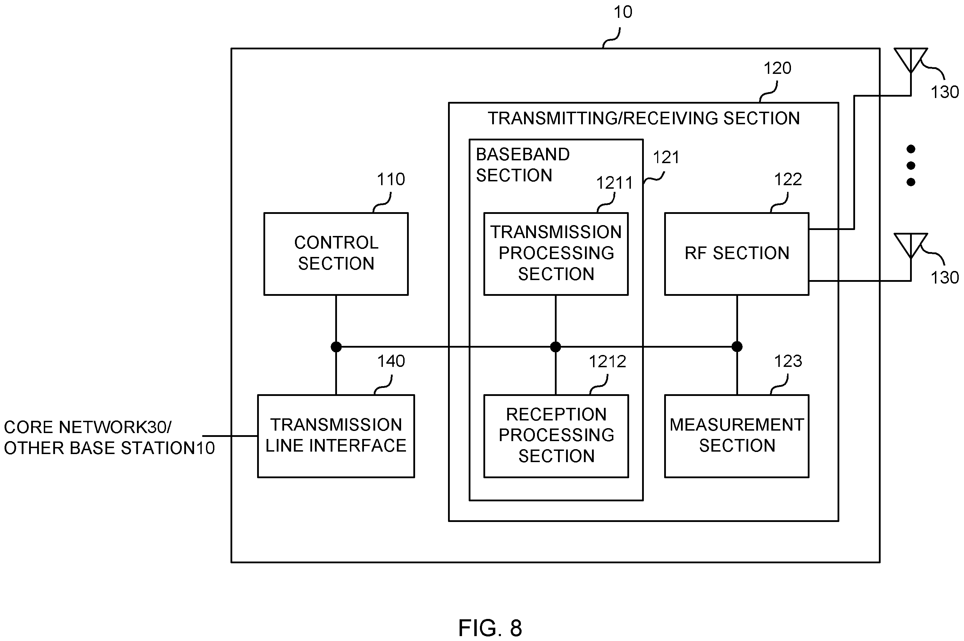

FIG. 8 is a diagram illustrating one example of a configuration of the base station according to one Embodiment. The base station 10 is provided with a control section 110, transmitting/receiving section 120, transmitting/receiving antennas 130, and transmission line interface 140. In addition, the base station may be provided with one or more of each of the control section 110, transmitting/receiving section 120, transmitting/receiving antenna 130, and transmission line interface 140.

In addition, this example mainly illustrates function blocks of feature parts in this Embodiment, and the base station 10 may be assumed to have other function blocks required for radio communication. A part of processing of each section described below may be omitted.

The control section 110 performs control of the entire base station 10. The control section 110 is capable of being comprised of a controller, control circuit and the like explained based on common recognition in the technical field according to the present disclosure.

The control section 110 may control generation of signals, scheduling (e.g., resource allocation, mapping) and the like. The control section 110 may control transmission/reception, measurement and the like using the transmitting/receiving section 120, transmitting/receiving antenna 130 and transmission line interface 140. The control section 110 may generate data, control information, sequence and the like to transmit as a signal, and transfer the resultant to the transmitting/receiving section 120. The control section 110 may perform call processing (configuration, release, etc.) of a communication channel, state management of the base station 10, management of radio resources and the like.

The transmitting/receiving section 120 may include a baseband section 121, Radio Frequency (RF) section 122 and measurement section 123. The baseband section 121 may include a transmission processing section 1211 and reception processing section 1212. The transmitting/receiving section 120 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 120 may be comprised as an integrated transmitting/receiving section, or may be comprised of a transmitting section and a receiving section. The transmitting section may be comprised of a transmission processing section 1211 and RF section 122. The receiving section may be comprised of a reception processing section 1212, RF section 122, and measurement section 123.

The transmitting/receiving antenna 130 is capable of being comprised of an antenna, for example, an array antenna and the like explained based on the common recognition in the technical field according to the present disclosure.

The transmitting/receiving section 120 may transmit the above-mentioned downlink channel, synchronization signal, downlink reference signal and the like. The transmitting/receiving section 120 may receive the above-mentioned uplink channel, uplink reference signal and the like.

The transmitting/receiving section 120 may form at least one of a transmission beam and reception beam, using digital beam forming (e.g., precoding), analog beam forming (e.g., phase rotation) and the like.

The transmitting/receiving section 120 (transmission processing section 1211) may perform, for example, on the data, control information and the like acquired from the control section 110, processing of Packet Data Convergence Protocol (PDCP) layer, processing (e.g., RLC retransmission control) of Radio Link Control (RLC) layer, processing (e.g., HARQ retransmission control) of Medium Access Control (MAC) layer and the like to generate a bit sequence to transmit.

The transmitting/receiving section 120 (transmission processing section 1211) may perform, on the bit sequence to transmit, transmission processing such as channel coding (which may include error correcting coding), modulation, mapping, filter processing, Discrete Fourier Transform (DFT) processing (as necessary), Inverse Fast Fourier Transform (IFFT) processing, precoding and digital-analog conversion, and output a baseband signal.

The transmitting/receiving section 120 (FR section 122) may perform modulation to a radio frequency band, filter processing, amplification and the like on the baseband signal to transmit a signal of the radio frequency band via the transmitting/receiving antenna 130.

On the other hand, the transmitting/receiving section 120 (RF section 122) may perform amplification, filter processing, demodulation to a baseband signal and the like on a signal of the radio frequency band received by the transmitting/receiving antenna 130.

The transmitting/receiving section 120 (reception processing section 1212) may apply reception processing such as analog-digital conversion, Fast Fourier Transform (FTT) processing, Inverse Discrete Fourier Transform (IDFT) processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 120 (measurement section 123) may perform measurement on a received signal. For example, based on the received signal, the measurement section 123 may perform Radio Resource Management (RRM) measurement, Channel State Information (CSI) measurement and the like. The measurement section 123 may measure received power (e.g., Reference Signal Received Power (RSRP)), received quality (e.g., Reference Signal Received Quality (RSRQ), Signal to Interference plus Noise Ratio (SINR), Signal to Noise Ratio (SNR)), signal strength (e.g., Received Signal Strength Indicator (RSSI)), propagation path information (e.g., CSI) and the like. The measurement result may be output to the control section 110.

The transmission line interface 140 may transmit/receive signals (backhaul signaling) to/from an apparatus included in the core network 30, another base station 10 and the like to perform acquisition, transmission and the like of user data (user plain data), control plain data and the like for the user terminal 20.

In addition, the transmitting section and receiving section of the base station 10 in the present disclosure may be comprised of at least one of the transmitting/receiving section 120, transmitting/receiving antenna 130 and transmission line interface 140.

In addition, the transmitting/receiving section 120 may perform listening (LBT, I-LBT) before transmission, and in the case where the listening result is idle, transmit the downlink control channel (PDCCH, downlink control information), downlink shared channel (PDSCH, data) and the like.

### (User terminal)

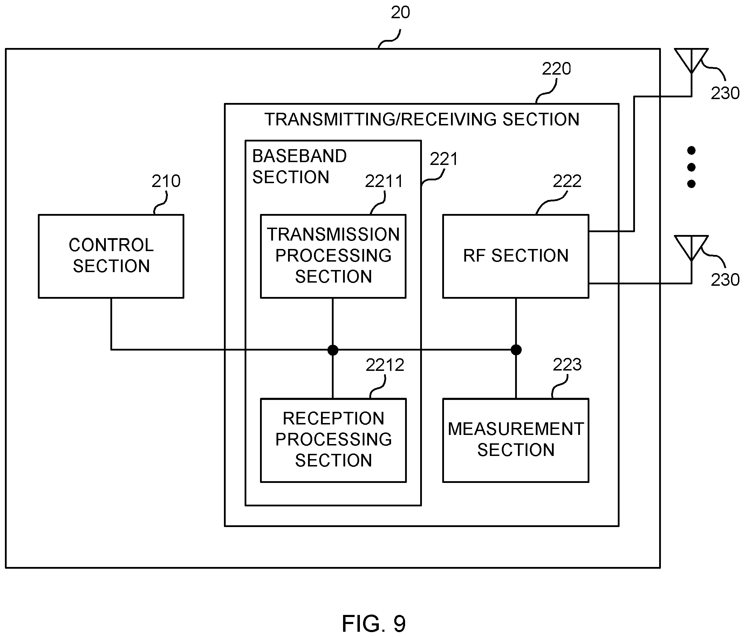

FIG. 9 is a diagram illustrating one example of a configuration of the user terminal according to one Embodiment. The user terminal 20 is provided with a control section 210, transmitting/receiving section 220, and transmitting/receiving antennas 230. In addition, the user terminal may be provided with one or more of each of the control section 210, transmitting/receiving section 220 and transmitting/receiving antenna 230.

In addition, this example mainly illustrates function blocks of feature parts in this Embodiment, and the user terminal 20 may be assumed to have other function blocks required for radio communication. A part of processing of each section described below may be omitted.

The control section 210 performs control of the entire user terminal 20. The control section 210 is capable of being comprised of a controller, control circuit and the like explained based on the common recognition in the technical field according to the present disclosure.

The control section 210 may control generation of signals, mapping and the like. The control section 210 may control transmission/reception, measurement and the like using the transmitting/receiving section 220 and transmitting/receiving antenna 230. The control section 210 may generate data, control information, sequence and the like to transmit as a signal, and transfer the resultant to the transmitting/receiving section 220.

The transmitting/receiving section 220 may include a baseband section 221, RF section 222 and measurement section 223. The baseband section 221 may include a transmission processing section 2211 and reception processing section 2212. The transmitting/receiving section 220 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 220 may be comprised as an integrated transmitting/receiving section, or may be comprised of a transmitting section and a receiving section. The transmitting section may be comprised of a transmission processing section 2211 and RF section 222. The receiving section may be comprised of a reception processing section 2212, RF section 222, and measurement section 223.

The transmitting/receiving antenna 230 is capable of being comprised of an antenna, for example, an array antenna and the like explained based on the common recognition in the technical field according to the present disclosure.

The transmitting/receiving section 220 may receive the above-mentioned downlink channel, synchronization signal, downlink reference signal and the like. The transmitting/receiving section 220 may transmit the above-mentioned uplink channel, uplink reference signal and the like.

The transmitting/receiving section 220 may form at least one of a transmission beam and reception beam, using digital beam forming (e.g., precoding), analog beam forming (e.g., phase rotation) and the like.

The transmitting/receiving section 220 (transmission processing section 2211) may perform, for example, on the data, control information and the like acquired from the control section 210, processing of PDCP layer, processing (e.g., RLC retransmission control) of RLC layer, processing (e.g., HARQ retransmission control) of MAC layer and the like to generate a bit sequence to transmit.

The transmitting/receiving section 220 (transmission processing section 2211) may perform, on the bit sequence to transmit, transmission processing such as channel coding (which may include error correcting coding), modulation, mapping, filter processing, DFT processing (as necessary), IFFT processing, precoding and digital-analog conversion, and output a baseband signal.

In addition, whether or not to apply the DFT processing may be based on configuration of transform precoding. In the case where transform precoding is enabled on some channel (e.g., PUSCH), the transmitting/receiving section 220 (transmission processing section 2211) may perform the DFT processing as the above-mentioned transmission processing so as to transmit the channel using a DFT-s-OFDM waveform. In the other case, the section may not perform the DFT processing as the above-mentioned transmission processing.

The transmitting/receiving section 220 (FR section 222) may perform modulation to a radio frequency band, filter processing, amplification and the like on the baseband signal to transmit a signal of the radio frequency band via the transmitting/receiving antenna 230.

On the other hand, the transmitting/receiving section 220 (RF section 222) may perform amplification, filter processing, demodulation to a baseband signal and the like on a signal of the radio frequency band received by the transmitting/receiving antenna 230.

The transmitting/receiving section 220 (reception processing section 2212) may apply reception processing such as analog-digital conversion, FTT processing, IDFT processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 220 (measurement section 223) may perform measurement on a received signal. For example, based on the received signal, the measurement section 223 may perform RRM measurement, CSI measurement and the like. The measurement section 223 may measure received power (e.g., RSRP), received quality (e.g., RSRQ, SINR, SNR), signal strength (e.g., RSSI), propagation path information (e.g., CSI) and the like. The measurement result may be output to the control section 210.

In addition, the transmitting section and receiving section of the user terminal 20 in the present disclosure may be comprised of at least one of the transmitting/receiving section 220, transmitting/receiving antenna 230 and transmission line interface 240.

In addition, at a transmission opportunity (TxOP, COT, etc.) based on listening, the transmitting/receiving section 220 may receive first downlink control information indicative of resources of a downlink shared channel (PDSCH) and resources of an uplink control channel (PUCCH) for Hybrid Automatic Repeat reQuest-ACKnowledgement (HARQ-ACK) in response to the downlink shared channel, and second downlink control information indicative of resources of a plurality of uplink shared channels (PUSCHs) and a given field (UL DAI, first DAI, second DAI, etc.). In the case where at least one given uplink shared channel among the plurality of uplink shared channels overlaps the uplink control channel, the control section 210 may determine whether or not to multiplex the HARQ-ACK into the given uplink shared channel, based on the given field.

The plurality of uplink shared channels may exist over a plurality of slots (multi-TTI scheduling).

The given field may indicate at least one of whether or not to multiplex the HARQ-ACK into the given uplink shared channel (Aspect 1, Aspect 2-1, Aspect 3, Aspect 4), and the given uplink shared channel (Aspect 2-2, Aspect 3).

The control section 210 may determine the given uplink shared channel, based on at least one of respective time resources of the plurality of uplink shared channels, respective HARQ process numbers of the plurality of uplink shared channels, and respective frequency resources of the plurality of uplink shared channels (Aspect 1, Aspect 2, Aspect 3).

The control section 210 may perform one of assuming that the plurality of uplink shared channels does not conflict with an uplink control channel indicated by the first downlink control information (Aspect 5-1), and dropping the uplink shared channel or the uplink control channel in the case where the uplink shared channel conflicts with the uplink control channel (Aspects 5-2, 5-3).

### (Hardware configuration)

In addition, the block diagrams used in explanation of the above-mentioned Embodiment illustrate blocks on a function-by-function basis. These function blocks (configuration sections) are actualized by any combination of at least one of hardware and software. Further, the method for actualizing each function block is not limited particularly. In other words, each function block may be actualized using a single apparatus combined physically and/or logically, or two or more apparatuses that are separated physically and/or logically are connected directly and/or indirectly (e.g., using cable, radio, etc.), and each function block may be actualized using a plurality of these apparatuses. The function block may be actualized by combining the above-mentioned one apparatus or the above-mentioned plurality of apparatuses and software.

Herein, the function includes judging, determining, deciding, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning and the like, but is not limited thereto. For example, the function block (configuration section) having the function of transmitting may be called a transmitting unit, transmitter and the like. In any case, as described above, the actualizing method is not limited particularly.

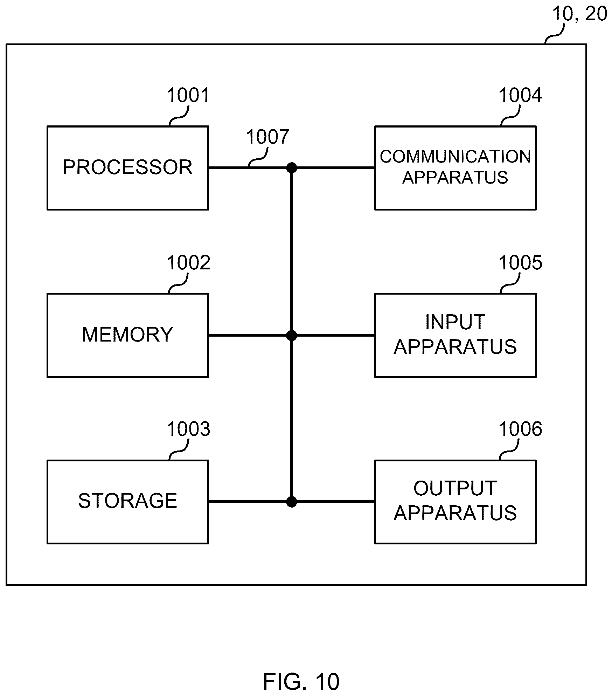

For example, each of the base station, user terminal and the like in one Embodiment of the present disclosure may function as a computer that performs the processing of the radio communication method of the disclosure. FIG. 10 is a diagram illustrating one example of a hardware configuration of each of the base station and user terminal according to one Embodiment. Each of the base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the present disclosure, it is possible to read the letter of apparatus, circuit, device, section, unit and the like with one another. With respect to each apparatus illustrated in the figure, the hardware configuration of each of the base station 10 and the user terminal 20 may be configured so as to include one or a plurality of apparatuses, or may be configured without including a part of apparatuses.

For example, a single processor 1001 is illustrated in the figure, but a plurality of processors may exist. Further, the processing may be executed by a single processor, or may be executed by one or more processors at the same time, sequentially or using another technique. In addition, the processor 1001 may be implemented on one or more chips.

For example, each function in the base station 10 and user terminal 20 is actualized in a manner such that given software (program) is read on the hardware of the processor 1001, memory 1002 and the like, and that the processor 1001 thereby performs computations, and controls communication via the communication apparatus 1004, and at least one of read and write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, at least a part of the above-mentioned control section 110 (210), transmitting/receiving section 120 (220) and the like may be actualized by the processor 1001.

Further, the processor 1001 reads the program (program code), software module, data and the like on the memory 1002 from at least one of the storage 1003 and the communication apparatus 1004, and according thereto, executes various kinds of processing. Used as the program is a program that causes the computer to execute at least a part of operation described in the above-mentioned Embodiment. For example, the control section 110 (210) may be actualized by a control program stored in the memory 1002 to operate in the processor 1001, and the other function blocks may be actualized similarly.

The memory 1002 is a computer-readable storage medium, and for example, may be comprised of at least one of Read Only Memory (ROM), Erasable Programmable ROM (EPROM), Electrically EPROM (EEPROM), Random Access Memory (RAM) and other proper storage media. The memory 1002 may be called the register, cache, main memory (main storage apparatus) and the like. The memory 1002 is capable of storing the program (program code), software module and the like executable to implement the radio communication method according to one Embodiment of the present disclosure.

The storage 1003 is a computer-readable storage medium, and for example, may be comprised of at least one of a flexible disk, floppy (Registered Trademark) disk, magneto-optical disk (e.g., compact disk (Compact Disc ROM (CD-ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via at least one of a wired network and a wireless network, and for example, is also referred to as a network device, network controller, network card, communication module and the like. For example, in order to actualize at least one of Frequency Division Duplex (FDD) and Time Division Duplex (TDD), the communication apparatus 1004 may be comprised by including a high-frequency switch, duplexer, filter, frequency synthesizer and the like. For example, the transmitting/receiving section 120 (220), transmitting/receiving antenna 130 (230) and the like as described above may be actualized by the communication apparatus 1004. The transmitting/receiving section 120 (220) may be made by physically or logically separated implementation using a transmitting section 120a (220a) and receiving section 120b (220b).

The input apparatus 1005 is an input device (e.g., keyboard, mouse, microphone, switch, button, sensor, etc.) that receives input from the outside. The output apparatus 1006 is an output device (e.g., display, speaker, Light Emitting Diode (LED) lamp, etc.) that performs output to the outside. In addition, the input apparatus 1005 and output apparatus 1006 may be an integrated configuration (e.g., touch panel).

Further, each apparatus of the processor 1001, memory 1002 and the like is connected on the bus 1007 to communicate information. The bus 1007 may be configured using a single bus, or may be configured using different buses between apparatuses.

Furthermore, each of the base station 10 and user terminal 20 may be configured by including hardware such as a microprocessor, Digital Signal Processor (DSP), Application Specific Integrated Circuit (ASIC), Programmable Logic Device (PLD), and Field Programmable Gate Array (FPGA), or a part or the whole of each function block may be actualized using the hardware. For example, the processor 1001 may be implemented using at least one of the hardware.

### (Modification)

In addition, the term explained in the present disclosure and the term required to understand the present disclosure may be replaced with a term having the same or similar meaning. For example, the channel, symbol and signal (or signaling) may be read with one another. Further, the signal may be a message. The reference signal is capable of being abbreviated as RS, and according to the standard to apply, may be called a pilot, pilot signal and the like. Furthermore, the component carrier (CC) may be called a cell, frequency carrier, carrier frequency and the like.

A radio frame may be comprised of one or a plurality of frames in the time domain. The one or each of the plurality of frames constituting the radio frame may be called a subframe. Further, the subframe may be comprised of one or a plurality of slots in the time domain. The subframe may be a fixed time length (e.g., 1 ms) that is not dependent on numerology.

Herein, the numerology may be a communication parameter applied to at least one of transmission and reception of some signal or channel. For example, the numerology may indicate at least one of SubCarrier Spacing (SCS), bandwidth, symbol length, cyclic prefix length, Transmission Time Interval (TTI), the number of symbols per TTI, radio frame configuration, given filtering processing performed by a transmitter/receiver in the frequency domain, given windowing processing performed by a transmitter/receiver in the time domain and the like.

The slot may be comprised of one or a plurality of symbols (Orthogonal Frequency Division Multiplexing (OFDM) symbols, Single Carrier Frequency Division Multiple Access (SC-FDMA) symbols and the like) in the time domain. Further, the slot may a time unit based on numerology.

The slot may include a plurality of mini-slots. Each mini-slot may be comprised of one or a plurality of symbols in the time domain. Further, the mini-slot may be called a subslot. The mini-slot may be comprised of the number of symbols lower than the slot. A PDSCH (or PUSCH) transmitted in a time unit larger than the mini-slot may be called PDSCH (PUSCH) mapping type A. A PDSCH (or PUSCH) transmitted using the mini-slot may be called PDSCH (PUSCH) mapping type B.

Each of the radio frame, subframe, slot, mini-slot and symbol represents a time unit in transmitting a signal. For the radio frame, subframe, slot, mini-slot and symbol, another name corresponding to each of them may be used. The time units such as the frame, subframe, slot, mini-slot and symbol in the present disclosure may be read with one another.

For example, one subframe may be called TTI, a plurality of contiguous subframes may be called TTI, or one slot or one mini-slot may be called TTI. In other words, at least one of the subframe and TTI may be the subframe (1 ms) in existing LTE, may be a frame (e.g., 1 to 13 symbols) shorter than 1 ms, or may be a frame longer than 1 ms. In addition, instead of the subframe, the unit representing the TTI may be called the slot, mini-slot and the like.

Herein, for example, the TTI refers to a minimum time unit of scheduling in radio communication. For example, in the LTE system, the base station performs scheduling for allocating radio resources (frequency bandwidth, transmit power and the like capable of being used in each user terminal) to each user terminal in a TTI unit. In addition, the definition of the TTI is not limited thereto.

The TTI may be a transmission time unit of a data packet (transport block) subjected to channel coding, code block, codeword and the like, or may be a processing unit of scheduling, link adaptation and the like. In addition, when the TTI is given, a time segment (e.g., the number of symbols) to which the transport block, code block, codeword and the like are actually mapped may be shorter than the TTI.

In addition, when one slot or one mini-slot is called the TTI, one or more TTIs (i.e., one or more slots, or one or more mini-slots) may be the minimum time unit of scheduling. Further, the number of slots (the number of mini-slots) constituting the minimum time unit of scheduling may be controlled.

The TTI having a time length of 1 ms may be called ordinary TTI (TTI in 3GPP LTE Rel.8-12), normal TTI, long TTI, ordinary subframe, normal subframe, long subframe, slot and the like. The TTI shorter than the ordinary TTI may be called shortened TTI, short TTI, partial or fractional TTI, shortened subframe, short subframe, mini-slot, subslot, slot and the like.

In addition, the long TTI (e.g., ordinary TTI, subframe, etc.) may be read with TTI having a time length exceeding 1 ms, and the short TTI (e.g., shortened TTI, etc.) may be read with TTI having a TTI length of 1 ms or more and less than the TTI length of the long TTI.

The resource block (RB) is a resource allocation unit in the time domain and frequency domain, and may include one or a plurality of contiguous subcarriers in the frequency domain. The number of subcarriers contained in the RB may be the same irrespective of the numerology, and for example, may be "12". The number of subcarriers contained in the RB may be determined based on the numerology

Further, the RB may include one or a plurality of symbols in the time domain, and may be a length of 1 slot, 1 mini-slot, 1 subcarrier, or 1 TTI. Each of 1 TTI and 1 subframe may be comprised of one or a plurality of resource blocks.

In addition, one or a plurality of RBs may be called a physical resource block (Physical RB (PRB)), subcarrier group (Sub-Carrier Group (SCG)), Resource Element Group (REG), PRB pair, RB pair and the like.

Further, the resource block may be comprised of one or a plurality of resource elements (Resource Element (RE)). For example, 1 RE may be a radio resource region of 1 subcarrier and 1 symbol.

A Bandwidth Part (BWP) (which may be called a partial bandwidth, etc.) may represent a subset of contiguous common RBs (common resource blocks) for some numerology in some carrier. Herein, the common RB may be identified by an index of the RB with a common reference point of the carrier as reference. The PRB may be defined by some BWP, and may be numbered within the BWP.

The BWP may include UL BWP (BWP for UL) and DL BWP (BWP for DL). For a UE, one or a plurality of BWPs may be configured within one carrier.

At least one of configured BWPs may be active, and the UE may not assume that a given signal/channel is transmitted and received outside the active BWP. In addition, the "cell", "carrier" and the like in the present disclosure may be read with the "BWP".

In addition, structures of the above-mentioned radio frame, subframe, slot, mini-slot, symbol and the like are only illustrative. For example, it is possible to modify, in various manners, configurations of the number of subframes included in the radio frame, the number of slots per subframe or radio frame, the number of mini-slots included in the slot, the numbers of symbols and RBs included in the slot or mini-slot, the number of subcarriers included in the RB, the number of symbols within the TTI, the symbol length, the cyclic prefix (CP) length and the like.

Further, the information, parameter and the like explained in the present disclosure may be expressed using an absolute value, may be expressed using a relative value from a given value, or may be expressed using another corresponding information. For example, the radio resource may be indicated by a given index.

The names used in the parameter and the like in the present disclosure are not restrictive names in any respects. Further, equations and the like using these parameters may be different from those explicitly disclosed in the disclosure. It is possible to identify various channels (PUCCH, PDCCH, etc.) and information elements, by any suitable names, and therefore, various names assigned to these various channels and information elements are not restrictive names in any respects.

The information, signal and the like explained in the present disclosure may be represented by using any of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Further, the information, signal and the like are capable of being output at least one of from a higher layer to a lower layer, and from the lower layer to the higher layer. The information, signal and the like may be input and output via a plurality of network nodes.

The input/output information, signal and the like may be stored in a given place (e.g., memory), or may be managed using a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiments described in the present disclosure, and may be performed using another method. For example, notification of the information in the disclosure may be performed using physical layer signaling (e.g., Downlink Control Information (DCI), Uplink Control Information (UCI)), higher layer signaling (e.g., Radio Resource Control (RRC) signaling, broadcast information (Master Information Block (MIB)), System Information Block (SIB) and the like), Medium Access Control (MAC) signaling), other signals, or combination thereof.

In addition, the physical layer signaling may be called Layer 1/Layer 2 (L1/L2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of given information (e.g., notification of "being X") is not limited to explicit notification, and may be performed implicitly (e.g., notification of the given information is not performed, or by notification of different information).

The decision may be made with a value ("0" or "1") expressed by 1 bit, may be made with a Boolean value represented by true or false, or may be made by comparison with a numerical value (e.g., comparison with a given value).

Irrespective of that the software is called software, firmware, middle-ware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using at least one of wired techniques (coaxial cable, optical fiber cable, twisted pair, Digital Subscriber Line (DSL) and the like) and wireless techniques (infrared, microwave and the like), at least one of the wired technique and the wireless technique is included in the definition of the transmission medium.

The terms of "system" and "network" used in the present disclosure are capable of being used interchangeably. A "network" may mean an apparatus (e.g., base station) included in the network.

In the present disclosure, the terms of "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "the number of layers", "rank", "resource", "resource set", "resource group", "beam", "beam width", "beam angle", "antenna", "antenna element", "panel" and the like are capable of being used interchangeably.

In the present disclosure, the terms of "Base Station (BS)", "radio base station", "fixed station", "NodeB", "eNB (eNodeB)", "gNB (gNodeB)", "access point", "Transmission Point (TP)", "Reception Point (RP)", "Transmission/Reception Point (TRP)", "panel", "cell", "sector", "cell group", "carrier", "component carrier" and the like are capable of being used interchangeably. There is the case where the base station is called by the terms of macrocell, small cell, femto-cell, pico-cell and the like.

The base station is capable of accommodating one or a plurality of (e.g., three) cells. When the base station accommodates a plurality of cells, the entire coverage area of the base station is capable of being segmented into a plurality of smaller areas, and each of the smaller areas is also capable of providing communication services by a base station sub-system (e.g., small base station (Remote Radio Head (RRH)) for indoor use). The term of "cell" or "sector" refers to a part or the whole of coverage area of at least one of the base station and the base station sub-system that perform communication services in the coverage.

In the present disclosure, the terms of "Mobile Station (MS)", "user terminal", "User Equipment (UE)", "terminal" and the like are capable of being used interchangeably.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be called a transmitting apparatus, receiving apparatus, radio communication apparatus and the like. In addition, at least one of the base station and the mobile station may be a device installed in a moving object, moving object itself and the like. The moving object may be a vehicle (e.g., car, airplane, etc.), may be a moving object (e.g., drone, self-driving car, etc.) without human intervention, or may be a robot (crewed type or unscrewed type). In addition, at least one of the base station and the mobile station includes an apparatus that does always not move at the time of communication operation. For example, at least one of the base station and the mobile station may be an Internet of Things (loT) device such as a sensor.

Further, the base station in the present disclosure may be read with the user terminal. For example, each Aspect/Embodiment of the disclosure may be applied to a configuration where communication between the base station and the user terminal is replaced with communication among a plurality of user terminals (for example, which may be called Device-to-Device (D2D), Vehicle-to-Everything (V2X), etc.). In this case, the functions that the above-mentioned base station 10 has may be the configuration that the user terminal 20 has. Further, the words of "up", "down" and the like may be read with a word (e.g., "side") that corresponds to Device-to-Device communication. For example, the uplink channel, downlink channel and the like may be read with a side channel.

Similarly, the user terminal in the present disclosure may be read with the base station. In this case, the functions that the above-mentioned user terminal 20 has may be the configuration that the base station 10 has.

In the present disclosure, operation performed by the base station may be performed by an upper node thereof in some case. In a network including one or a plurality of network nodes having the base station, it is obvious that various operations performed for communication with the terminal are capable of being performed by the base station, one or more network nodes (e.g., Mobility Management Entity (MME), Serving-Gateway (S-GW) and the like are considered, but the disclosure is not limited thereto) except the base station, or combination thereof.

Each Aspect/Embodiment explained in the present disclosure may be used alone, may be used in combination, or may be switched and used according to execution. Further, with respect to the processing procedure, sequence, flowchart and the like of each Aspect/Embodiment explained in the disclosure, unless there is a contradiction, the order may be changed. For example, with respect to the methods explained in the disclosure, elements of various steps are presented in illustrative order, and are not limited to the presented given order.

Each Aspect/Embodiment explained in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (Registered Trademark)), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), system using another proper radio communication method, the next-generation system extended based thereon and the like. Further, a plurality of systems may be combined (e.g., combination of LTE or LTE-A and 5G, etc.) to apply.

The description of "based on" used in the present disclosure does not mean "based on only", unless otherwise specified. In other words, the description of "based on" means both of "based on only" and "based on at least".

Any references to elements using designations of "first", "second" and the like used in the present disclosure do not limit the amount or order of these elements overall. These designations are capable of being used in the disclosure as the useful method to distinguish between two or more elements. Accordingly, references of first and second elements do not mean that only two elements are capable of being adopted, or that the first element should be prior to the second element in any manner.

There is the case where the term of "determining" used in the present disclosure includes various types of operation. For example, "determining" may be regarded as "determining" judging, calculating, computing, processing, deriving, investigating, looking up (searching, inquiring) (e.g., looking up in a table, database or another data structure), ascertaining and the like.

Further, "determining" may be regarded as "determining" receiving (e.g., receiving information), transmitting (e.g., transmitting information), input, output, accessing (e.g., accessing data in memory) and the like.

Furthermore, "determining" may be regarded as "determining" resolving, selecting, choosing, establishing, comparing and the like. In other words, "determining" may be regarded as "determining" some operation.

Still furthermore, "determining" may be read with "assuming", "expecting", "considering" and the like.

"Maximum transmit power" described in the present disclosure may mean a maximum value of transmit power, may mean the normal UE maximum transmit power, or may mean the rated UE maximum transmit power.

The terms of "connected" and "coupled" used in the present disclosure or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. For example, "connection" may be read with "access".

In the present disclosure, in the case where two elements are connected, it is possible to consider that two elements are mutually "connected" or "coupled", by using one or more electric wires, cable, print electric connection, and as some non-limited and non-inclusive examples, electromagnetic energy having wavelengths in a radio frequency region, microwave region and light (both visible and invisible) region, or the like.

In the present disclosure, the term of "A and B are different" may mean that "A and B are different from each other". In addition, the term may mean that "each of A and B is different from C". The terms of "separate", "coupled" and the like may be similarly interpreted.

In the case of using "include", "including", and modifications thereof in the present disclosure, as in the term of "comprising", these terms are intended to be inclusive. Further, the term of "or" used in the disclosure is intended to be not exclusive OR.

In the present disclosure, in the case where articles are added by translation, for example, as "a", "an" and "the" in English, the disclosure may include that nouns continued from these articles are in the plural.

As described above, the invention according to the present disclosure is described in detail, but it is obvious to a person skilled in the art that the invention according to the disclosure is not limited to the Embodiments described in the disclosure. The invention according to the disclosure is capable of being carried into practice as modified and changed aspects without departing from the subject matter and scope of the invention defined by the descriptions of the scope of the claims. Accordingly, the descriptions of the disclosure are intended for illustrative explanation, and do not provide the invention according to the disclosure with any restrictive meaning.

## Claims

1. A user terminal comprising:
a receiving section that receives first downlink control information indicative of a resource of a downlink shared channel and a resource of an uplink control channel for Hybrid Automatic Repeat reQuest-ACKnowledgement (HARQ-ACK) in response to a downlink shared channel, and second downlink control information indicative of resources of a plurality of uplink shared channels and a given field at a transmission opportunity based on listening; and
a control section that determines whether or not to multiplex the HARQ-ACK into a given uplink shared channel based on the given field, when at least one given uplink shared channel among the plurality of uplink shared channels overlaps the uplink control channel.

2. The user terminal according to claim 1, wherein the plurality of uplink shared channels exists over a plurality of slots.

3. The user terminal according to claim 1 or 2, wherein the given field indicates at least one of whether or not to multiplex the HARQ-ACK into the given uplink shared channel and the given uplink shared channel.

4. The user terminal according to any one of claims 1 to 3, wherein the control section determines the given uplink shared channel, based on at least one of respective time resources of the plurality of uplink shared channels, respective HARQ process numbers of the plurality of uplink shared channels, and respective frequency resources of the plurality of uplink shared channels.

5. The user terminal according to claim 1 or 2, wherein the control section performs one of assuming that the plurality of uplink shared channels do not conflict with an uplink control channel indicated by the first downlink control information, and dropping the uplink shared channel or the uplink control channel when the uplink shared channel conflicts with the uplink control channel.

6. A radio communication method of a user terminal, including:
receiving first downlink control information indicative of a resource of a downlink shared channel and a resource of an uplink control channel for Hybrid Automatic Repeat reQuest-ACKnowledgement (HARQ-ACK) in response to a downlink shared channel, and second downlink control information indicative of resources of a plurality of uplink shared channels and a given field at a transmission opportunity based on listening; and
determining whether or not to multiplex the HARQ-ACK into a given uplink shared channel based on the given field, when at least one given uplink shared channel among the plurality of uplink shared channels overlaps the uplink control channel.
